# EUROPEAN PATENT SPECIFICATION

(11) **EP 1 443 026 B1**
(45) Date of publication and mention of the grant of the patent: **09.12.2009**
(21) Application number: 02800803.5
(22) Date of filing: 02.04.2002
(51) Int. Cl.: C02F 1/20, B01D 19/00

(54) **CENTRIFUGAL DEAERATOR**
ZENTRIFUGALENTLÜFTER
DESAERATEUR CENTRIFUGE

(30) Priority: 08.10.2001 RU 2001126955
(43) Date of publication of application: 04.08.2004
(73) Proprietor: Adzhiev, Ziyavdin Magomedovich, Dagestan, 368000 (RU)
(72) Inventor: Adzhiev, Ziyavdin Magomedovich, Dagestan, 368000 (RU)
(74) Representative: Bucher, Ralf Christian
(86) International application number: PCT/RU2002/000150
(87) International publication number: WO 2003/031337

(56) References cited:
- DE-A- 3 228 038
- FR-A- 2 086 768
- GB-A- 1 510 475
- GB-A- 2 082 942
- RU-C1- 2 102 329

## Description

This invention applies to heat-and-power engineering and could be used for deaerating of feed, makeup and heating-system water.

People are familiar with cyclone-type deaerators such as the one known from RU-C-2102329, which consists of the following parts: a cylindrical body, located vertically and having manifolds for the supply of heated water to be deaerated located tangentially in its upper part; a funnel with the manifold for the discharge of deaerated water located in the lower part of the body with an evaporating tube located inside the body in line with an outlet flange in the upper end of the tube; aligning blades located in the discharge manifold.

DE 32 28 038 A discloses a liquid/gas separator for usage in boreholes at large depths for oil exploration. In order to avoid the poor efficiency of centrifugal type separators at high flow rates, this separator comprises a hub with helical blades for pressurization of a liquid/gas mixture and aligning blades located upstream of the helical blades forming a centrifugal type separator for separating the liquid components from the gaseous components of the mixture. According to this design, the separator is capable of separating liquid/gas mixtures also at high flow rates with a high efficiency. Thus, this separator is suitable to be used in boreholes at large depths for oil exploration in order to efficiently separate liquid and gaseous components and to avoid a blocking of an oil pump due to a too high content of gaseous components in the separated liquid.

GB 1510475 A discloses a method of continuously degassing a liquid, wherein the method comprises passing the liquid into one end of a cylindrical vessel at which end is located a cylindrical swirl chamber in which the liquid is caused to swirl, feeding the swirling liquid into an axial tubular space the diameter of which is smaller than the cylindrical chamber whereby the radial acceleration of the spinning body of liquid in the space causes a separation of the lighter gas bubbles from the denser liquid so that the gas concentrates in the region of the axis as a moving central core and the substantially gas - free liquid presses against the wall of the tubular space, allowing the central core of gas to pass restriction free out of the cylindrical vessel through the centre of a separating member present in the enlarged end of the tube remote from the swirl chamber, and restricting the flow of substantially gas - free liquid in its passage out of the vessel through a narrow passage between member and the inner wall of the enlarged end thereby maintaining a positive pressure at the entry to the gas discharge duct.

A centrifugal cavitational heated water deaerator DKC 7-01 (NPF "AS-TEK", Chelyabinsk, Certificate issued in 1991) could be considered as the most similar product (prototype). It also consists of a cylindrical body which could be located horizontally , vertically or inclined; a swirler located inside of the body at the inlet for deaerated water; and an evaporating tube located coaxially inside of the body.

The major drawback of available systems is the loss of deaerated water through the evaporating tube resulting in deaeration stoppage.

The next but not the less important disadvantage of any vacuum deaerator is that the water coming out of the deaerator is under rarefaction which requires the installation of expensive devices to bring it to the atmospheric pressure.

It is an object of the invention to provide a centrifugal deaerator with a reduced loss of deaerated water through the evaporating tube.

This object is achieved with a centrifugal deaerator with the features of the independent claim.

The proposed design of a centrifugal deaerator will nearly eliminate the loss of water through an evaporating tube and keep a stable status of inner cavity (cavern) filled up with a steam-and-gas mixture.

Dependent on the temperature of deaerated water, this steam-and-gas mixture can go through the evaporating tube out into the atmosphere (atmospheric mode) , and with a temperature of below 100°C but not lower than 50°C this mixture can be sucked off by means of any vacuum pump, eg. A water elevator (vacuum mode).

With the vacuum mode the amount of rarefaction in the cavity should ensure the boiling up of the upper layer of deaerated water.

Independent of the amount of rarefaction with the vacuum mode, the deaerated water at the outlet from the deaerator will have a pressure exceeding the atmospheric pressure.

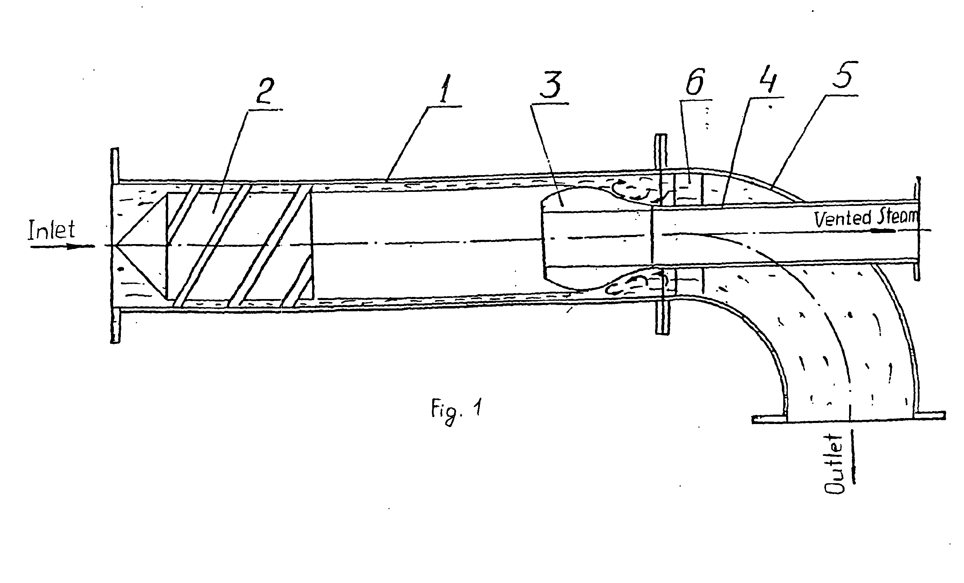

The comments to the design of the centrifugal deaerator are in the drawing.

A centrifugal deaerator consists of the following components: a cylindrical body 1 located in any position; a swirler 2 which represents the rotating body with spiral ribs fixed at a supply of deaerated water into the cylindrical body 1.

A rotating body 3 is located at an experimentally defined distance from the swirler 2 inside the body 1. With its outer surface inside the cylindrical body 1 , this rotating body forms a nozzle which first converges up to a minimum annular gap 1-2 mm larger than a gap between body 1 and swirler 2, and then continuously expands.

The rotating body 3 passes into the evaporating tube 4 located coaxially with the cylindrical body and brought out through a discharge 5.

Rectifying (aligning) blades 6 are located at some distance from the rotating body 3.

The system operates in the following way:

Heated water to be deaerated goes to the deaerator with an excessive pressure of 2,5-3 kg/cm², is forced through the gap between the swirler 2 and body 1 through the channels formed by the swirler coils, and then twisted.

The speed of the forced water is 12-15 m/sec, with an axial component (along the body axis) being 1-3 m/sec. Streams from the swirler 2 moving along the spiral will form the longitudinally moving general layer of deaerated water pressed against the inner wall of the cylindrical body 1 by centrifugal forces.

This layer moves along the body up to the aligning blades 6 passing the minimum gap of the "nozzle" formed by body 1 and body 3.

The peripheral speed on the aligning blades is slowed down and a partial compensation of pressure follows. A return whirling flow is formed but the newly supplied " twisted water" doesn't allow the return whirling flow to pass through the minimum gap of the "nozzle".

Therefore, in the area between the swirler 2 and body 3, a stable cavity is formed inside the quickly rotating and mixing streams in the ring layer of deaerated water.

The steam-and-gas mixture will be supplied into this formed cavity due to various physical processes: thermal boiling, artificial gravity field, separation, cavitation.

The proposed design of a centrifugal deaerator will ensure the water deaeration up to the content of oxygen of 20-50 microgramme/liter, carbon dioxide being removed completely.

## Claims

1. A centrifugal deaerator consisting of
- a cylindrical body (1),
- a swirler (2) with spiral ribs,
- an evaporating tube (4) located coaxially inside the cylindrical body (1),
- aligning blades (6),
- a hollow rotating body (3), which is located at a pre-defined distance from the swirler (2), and
- a discharge outlet (5) for deaerated water,
**characterized in that**
- the hollow rotating body (3) forms the beginning of the evaporating tube (4) and its outer surface together with the inner surface of the cylindrical body (1) forms a nozzle with a section that converges up to a minimum size and then expands,
- the aligning blades (6) are located along the evaporating tube (4) and downstream of the hollow rotating body (3), and
- the spiral ribs of the swirler (2) are fixed into the cylindrical body (1) at the deaerator inlet to form a moving layer of water along the inner wall of the cylindrical body (1) up to the aligning blades (6) passing the nozzle and a stable cavity between the swirler (2) and the hollow rotating body (3).

## Patentansprüche

1. Zentrifugalentlüfter umfassend
- einen zylindrischen Körper (1),
- einen Verwirbler (2) mit spiralförmigen Lamellen,
- eine Abdampfröhre (4), die koaxial innerhalb des zylindrischen Körpers (1) angeordnet ist,
- vAusrichteschaufeln (6),
- einen hohlen rotierenden Körper (3), der in einem vorgegebenen Abstand vom Verwirbler (2) angeordnet ist, und
- eine Abflussöffnung (5) für entlüftetes Wasser,
**dadurch gekennzeichnet, dass**
- der hohle rotierende Körper (3) den Beginn der Abdampfröhre (4) bildet und seine äußere Oberfläche zusammen mit der inneren Oberfläche des zylindrischen Körpers (1) eine Düse mit einem Abschnitt bildet, der bis zu einer Minimalgröße konvergiert und dann aufgeht,
- die Ausrichteschaufeln (6) entlang der Abdampfröhre (4) und stromabwärts zum hohlen rotierenden Körper (3) angeordnet sind, und
- die spiralförmigen Lamellen des Verwirblers (2) innerhalb des zylindrischen Körpers (1) beim Entlüftereinlass fixiert sind, um eine sich bewegende durch die Düse gebende Wasserschicht entlang der inneren Wand des zylindrischen Körpers (1) bis zu den Ausrichtcschaufeln (6) und eine stabile Kavität zwischen dem Verwirbler (2) und dem hohlen rotierenden Körper (3) auszubilden.

## Revendications

1. Le désaérateur centrifuge comprenant
- un corps cylindrique (1),
- un swirler (2) avec les ailes en spirale,
- un tube évaporant (4) localisé coaxialement à l'intérieur du corps cylindrique (1),
- pales alignantes (6),
- un corps rotatif creux (3) localisé à un distance prédéfinie de le swirler (2), et
- une sortie de décharge (5) pour l'eau chassée l'air,
**caractérisé en ce que**
- le corps rotatif creux (3) forme le commencement de le tube évaporant (4) et dont surface extérieure conjointement avec la surface intérieure de le corps cylindrique (1) forme une buse avec un tronçon qui converge jusqu'à la taille minimale et puis se dilate,
- les pales alignantes (6) sont localisé le long du tube évaporant (4) et en descendant le courant de le corps rotatif creux (3), et
- les ailes en spirale de le swirler (2) sont fixées dans le corps cylindrique (1) à le admission de le désaérateur forme une couche émouvante de l'eau le long de mur intérieur du corps cylindrique (1) jusqu'aux pales alignantes (6) passant la buse et une cavité stable entre le swirler (2) et le corps rotatif creux (3).
